Europäisches Patentamt

European Patent Office

Office européen des brevets

(11) Veröffentlichungsnummer: **0 459 205 A1**

# (12) EUROPÄISCHE PATENTANMELDUNG

(21) Anmeldenummer: **91107742.8**

(22) Anmeldetag: **14.05.91**

(51) Int. Cl.5: **B23Q 11/00, B24C 9/00**

(30) Priorität: **01.06.90 DE 4017677**

(43) Veröffentlichungstag der Anmeldung:
**04.12.91 Patentblatt 91/49**

(84) Benannte Vertragsstaaten:
**AT BE CH DE ES FR GB IT LI NL SE**

(71) Anmelder: **SCHLICK-Roto-Jet Maschinenbau GmbH**
**Industriestrasse 2**

**W-4439 Metelen(DE)**

(72) Erfinder: **Schlick, Horst-Dieter**
**Heinrich-Schlick-Str. 2**
**W-4439 Metelen(DE)**

(74) Vertreter: **Hoffmeister, Helmut, Dr. Dipl.-Phys.**
**Patentanwalt Goldstrasse 36**
**W-4400 Münster(DE)**

(54) Zusatzvorrichtung für eine Schleuderstrahlanlage zur Entfernung des Strahlmittels bei grossen Werkstücken.

(57) Die Erfindung betrifft eine Zusatzvorrichtung für eine Schleuderstrahlanlage, zur Entfernung des Strahlmittels aus von außen zugänglichen Hohlräumen bei großen Werkstücken, wie Motorblöcken, Getriebegehäusen und dergleichen, nach dem Bestrahlen, mit wenigstens einem rotierbaren Werkstück-Halter, wobei die Vorrichtung aus folgenden Einzelteilen besteht:
- einer ersten Halterwelle (4), an deren äußerem Ende der Werkstück-Halter (3) in Axial-Ausrichtung befestigt ist und die mit dem Werkstück-Halter (3) um ihre eigene Achse drehbar ist,
- einem Drehantrieb (7) mit horizontaler Drehachse, an dem die Halterwelle (4) mit ihrem inneren Ende über ein Getriebe befestigt ist und mit welchem Drehantrieb (7) sie um dessen Drehachse dreh- oder schwenkbar ist.
An dem Drehantrieb (7) sind wenigstens zwei Halterwellen (4, 5) mit Werkstück-Haltern (3, 6) in symmetrischer Anordnung angebracht sind.

EP 0 459 205 A1

Die Erfindung betrifft eine Zusatzvorrichtung für eine Schleuderstrahlanlage, zur Entfernung des Strahlmittels aus von außen zugänglichen Hohlräumen bei großen Werkstücken, wie Motorblöcken, Getriebegehäusen und dergleichen, nach dem Bestrahlen, mit wenigstens einem rotierbaren Werkstück-Halter.

Es ist bekannt, bei Schleuderstrahlanlagen, die mit rotierbaren Werkstück-Haltern arbeiten, nach dem Bestrahlen die Werkstücke zu drehen, so daß das Strahlmittel aus den von außen zugänglichen Hohlräumen herausrieselt und damit entfernt wird. Die Werkstücke können beispielsweise mit Spannvorrichtungen oder in Käfigen (vgl. DE-PS 25 22 620) gehaltert werden und entsprechend gedreht werden. Es hat sich herausgestellt, daß bei komplizierten Werkstücken weniger das Strahlen, als vielmehr das anschließende Entleeren der Strahlmittel aus den zugänglichen Hohlräumen große Probleme darstellt. Besonders kritisch sind verwinkelte Wasserräume bei Zylinderköpfen und Motorengehäusen im Automobilsektor.

Für derartige komplizierte und große Werkstücke reichen die in Bestrahlanlagen integrierten Entleerungsstationen für derartige Werkstücke nicht aus, da beispielsweise die für das Strahlen erforderlichen Drehpositionen nicht alle die Positionen umfassen, die für die Entleerung erforderlich sind.

Es stellt sich daher die Aufgabe, einerseits Strahlvorrichtungen von den Entleerungspositionen zu befreien und damit die Strahlvorrichtungen zu vereinfachen und weiterhin, das Entleeren der Werkstücke zuverlässig so durchführen zu können, daß sämtliche zugänglichen Hohlräume vom Strahlmittel befreit sind.

Zur Lösung dieser Aufgabe wird vorgeschlagen, die eingangs genannte Vorrichtung als Zusatzvorrichtung für eine Schleuderstrahlanlage zu gestalten, also nicht mehr grundsätzlich mit der übrigen Bestrahlanlage zu integrieren, wobei die Zusatzvorrichtung gekennzeichnet ist durch folgende Einzelteile

- eine erste Halterwelle, an deren äußerem Ende der Werkstück-Halter in Axial-Ausrichtung befestigt ist und die mit dem Werkstück-Halter um ihre eigene Achse drehbar ist,
- einem Drehantrieb mit horizontaler Drehachse, an dem die Halterwelle mit ihrem inneren Ende über ein Getriebe befestigt ist und mit welchem Drehantrieb sie um dessen Drehachse dreh- oder schwenkbar ist.

Bekannt ist weiterhin aus der DE-A1 33 06 857 eine Fördereinrichtung für Gußstücke in Gußputzanlagen. Bei dieser Anlage ist eine um eine horizontale und leicht geneigte Achse rotierender, zangenartiger Gußstückhalter vorgesehen, der dazu dient, Gußstücke unter möglichst vielen Winkelstellungen dem Putzstahl auszusetzen. Zugleich sorgt die Drehbewegung bei der bekannten Einrichtung dafür, daß gelockerter Formsand abfallen kann und noch unbearbeitete Stellen dem Putzstrahl ausgesetzt werden können. Bei der vorgenannten, bekannten Einrichtung handelt es sich demnach nicht um eine Zusatzvorrichtung, sondern um die eigentliche Bestrahl- und Putzvorrichtung, die dem der Anmeldung zugrunde liegenden Gerät vorgeschaltet ist. Die Zusatzvorrichtung gemäß vorliegender Anmeldung ist eine Apparatur sui generis, die um eine horizontale Drehachse rotiert und während der Rotation nicht mehr als Bestrahlungsvorrichtung verwendet wird.

Werden die Werkstücke vorzugsweise in einem Käfig als Werkstück-Halter gehalten, so ist gewährleistet, daß praktisch alle denkbaren Entleerungspositionen erreicht werden. Es ist aber auch möglich, die Zusatzvorrichtung in eine erste und eine zweite Reinigungsstation mit gleichen Einzelteilen aufzuteilen und zwischen den Reinigungsstationen Übergabestationen einzurichten, mit der Werkstücke unter Beachtung einer erforderlichen Lageveränderung von einer Reinigungsstation auf die andere überführbar sind. In diesem Falle bilden sämtliche Reinigungs- und Übergangsstationen die Zusatzvorrichtung. Schon bei zwei hintereinander geschalteten Reinigungsstationen ist gewährleistet, daß alle räumlich denkbaren Entleerungspositionen erreicht werden.

Zusätzlich können an festen Stellen der Entleerungsvorrichtungen Vibrationseinrichtungen vorgesehen werden, beispielsweise durch Kontaktrüttler oder Induktionsrüttler, so daß der Werkstück-Halter mit den Werkstücken in Vibration versetzbar ist. Darüber hinaus ist möglich, daß die Zusatzvorrichtung so gestaltet wird, daß sie nicht alle möglichen Positionen nacheinander anfährt, sondern bestimmte Werkstück spezifische Positionen unter Programmierung bestimmter anzufahrender Positionen und Auslassung nicht benötigter Positionen gesteuert angefahren werden.

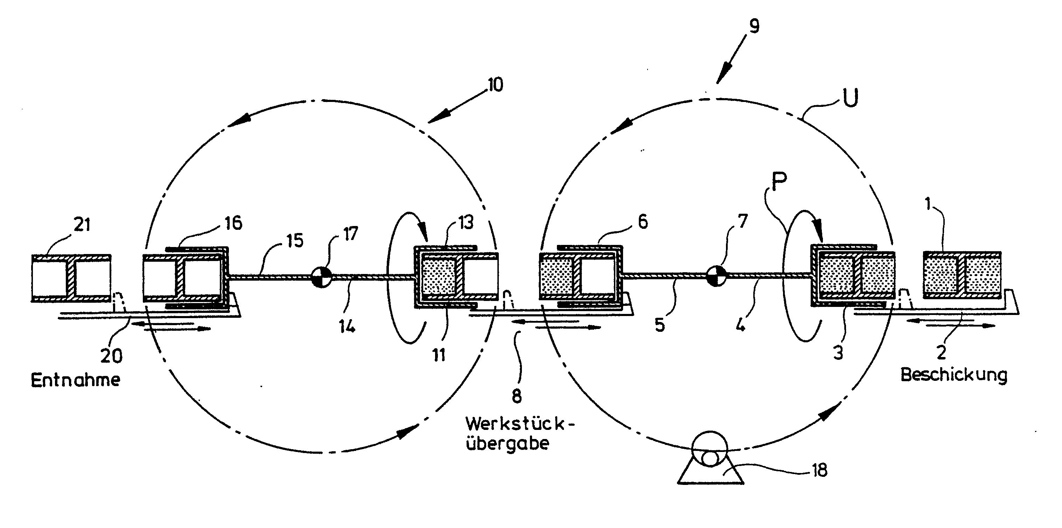

In der Zeichnung ist ein Ausführungsbeispiel der Zusatzvorrichtung schematisch dargestellt.

In der Zeichnung ist eine aus zwei Reinigungsstationen 9 und 10 sowie einer Übergabestation 8 bestehende Zusatzvorrichtung gemäß Erfindung dargestellt. Das von einer (nicht dargestellten) Schleuderstrahlanlage kommende Werkstück 1, in dessen von außen zugänglichen Hohlräumen nach dem Bestrahlen sich noch relativ viel Strahlmittel befindet, wird über eine Beschickungsvorrichtung 2 in einen Werkstück-Käfig 3 eingeschoben. In diesem wird es gehaltert. Der Werkstück-Käfig 3 ist in Axial-Ausrichtung an einer ersten Halterwelle 4 befestigt. Die Halterwelle 4 ist mit dem Werkstück-Halter 3 um ihre eigene Achse drehbar, wie durch den Drehpfeil P angedeutet wird. Der Werkstück-Halter befindet sich am äußeren Ende der Halterwelle 4. Anstelle eines Käfigs kann gegebenenfalls auch ein anderer Werkstück-Halter, beispielsweise eine Spannzange, wie sie an sich bekannt ist, eingesetzt werden.

Die erste Reinigungsstation 9 besitzt ferner einen weiteren Drehantrieb mit horizontaler Drehachse, der durch die Bezugszahl 7 angedeutet ist. An dem Drehantrieb 7 ist die Halterwelle 4 mit ihrem inneren Ende über ein Getriebe befestigt. Mit dem Drehantrieb 7 kann sie um dessen horizontale Drehachse gedreht oder geschwenkt werden. Diese uhrzeigerartige Drehbewegung ist durch den Umfangskreis U dargestellt. Zur besseren Auslastung und zur Korrektur der Unwucht ist an dem Drehantrieb 7 eine weitere, zweite Halterwelle 5 angebracht, die ebenfalls einen Werkstück-Käfig 6 trägt. Auch dieser ist drehbar mit der Welle verbunden. Am tiefsten Punkt der ersten Reinigungsstation ist noch eine berührungslose Vibrationseinrichtung 18 vorgesehen, mit der beispielsweise ein dort angehaltener Werkstück-Käfig 3 mit Werkstück 1 in Vibration zu versetzen ist, so daß eventuell anhaftende Strahlmittelteilchen gelöst und ausgeschüttelt werden. Eine solche oder ähnliche Vibrationsstation kann auch an anderen Stellen der Bewegungsfolge vorgesehen werden. Es ist auch möglich, einen solchen Vibrationsmotor über einen Stößel mit dem Werkstückkäfig oder dem Werkstück direkt zu verbinden.

Zwischen der ersten und der zweiten Reinigungsstation, die im wesentlichen gleich aufgebaut sind, liegt die Übergabestation 8. Nach Lösen der Werkstücke und öffnen des Käfigs kann das Werkstück entnommen werden. Unter Beachtung einer erforderlichen oder zu vermeidenden Lageveränderung wird das Werkstück 11 vom Käfig 6 in den Käfig 13 befördert. Bisher möglicherweise nicht berücksichtige oder freigelegte Hohlräume gelangen nunmehr in eine entsprechende Position, so daß das Strahlmittel herausfallen kann. Hierzu ist die zweite Reinigungsstation mit entsprechenden Halterwellen 14, 15, einem Drehantrieb 17 und Werkstück-Käfigen 13, 16 versehen. Nach dem entsprechenden Durchlauf durch die Reinigungsstation 10 kann das Werkstück, Bezugszahl 21, an einer Entnahmestation 20 entnommen werden.

Die vorstehend beschriebene Zusatzvorrichtung kann wesentlich einfacher ausgeführt werden als eine Bestrahlvorrichtung und führt trotzdem dazu, daß die Werkstücke in alle räumlich denkbaren Entleerungspositionen geführt werden, so daß kein Strahlmittel zurückbleibt.

**Patentansprüche**

1. Zusatzvorrichtung für eine Schleuderstrahlanlage, zur Entfernung des Strahlmittels aus von außen zugänglichen Hohlräumen bei großen Werkstücken, wie Motorblöcken, Getriebegehäusen und dergleichen, nach dem Bestrahlen, mit wenigstens einem rotierbaren Werkstück-Halter,
gekennzeichnet durch folgende Einzelteile
   - eine erste Halterwelle (4), an deren äußerem Ende der Werkstück-Halter (3) in Axial-Ausrichtung befestigt ist und die mit dem Werkstück-Halter (3) um ihre eigene Achse drehbar ist,
   - einem Drehantrieb (7) mit horizontaler Drehachse, an dem die Halterwelle (4) mit ihrem inneren Ende über ein Getriebe befestigt ist und mit welchem Drehantrieb (7) sie um dessen Drehachse dreh- oder schwenkbar ist.

2. Zusatzvorrichtung nach Anspruch 1, dadurch gekennzeichnet, daß an dem Drehantrieb (7) wenigstens zwei Halterwellen (4, 5) mit Werkstück-Haltern (3, 6) in symmetrischer Anordnung angebracht sind.

3. Zusatzvorrichtung nach Anspruch 1 oder 2, dadurch gekennzeichnet, daß ein Satz der Einzelteile gemäß Anspruch 1 eine erste Reinigungsstation (9) bildet, und daß wenigstens ein zweiter Satz der genannten Einzelteile eine zweite (gegebenenfalls dritte usw.) Reinigungsstation (10) bildet, und daß zwischen den Reinigungsstationen (9, 10) Übergabestationen (8) eingerichtet sind, mit der Werkstücke (1, 11, 21) unter Beachtung einer erforderlichen Lageveränderung von einer Reinigungsstation (9) auf die andere (10) überführbar sind, und daß sämtliche Reinigungs- und Übergabestationen die Zusatzvorrichtung bilden.

4. Zusatzvorrichtung nach Anspruch 1 bis 3, dadurch gekennzeichnet, daß die Werkstück-Halter Käfige (3, 6, 13, 16) oder Spannzangen sind.

5. Zusatzvorrichtung nach Anspruch 1 bis 4, dadurch gekennzeichnet, daß an wenigstens einer Reinigungsstation eine Vibrationseinrichtung (18) vorgesehen ist, mit der die Werkstück-Halter und/oder die Werkstücke in Vibration versetzbar sind.

**Europäisches Patentamt**

# EUROPÄISCHER RECHERCHENBERICHT

Nummer der Anmeldung

## EP 91 10 7742

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | JP-A-5 904 713 (OKUMA) <br> * Figuren 1-4 * | 1,4 | B 23 Q 11/00 <br> B 24 C 9/00 |
| Y | | 2,3,5 | |
| | – – – | | |
| Y | DE-C-9 361 76 (TIETZ) <br> * Anspruch * | 2,3 | |
| | – – – | | |
| Y | EP-A-0 116 977 (TOKYO) <br> * Seite 52, Zeilen 1-37; Seite 53, Zeilen 1-25; Figuren 31-33 * | 5 | |
| | – – – | | |
| A | DD-A-1 375 46 (BITTNER) | | |
| | – – – | | |
| A | US-A-2 343 357 (ZIMMERMAN) | | |
| | – – – – | | |

**RECHERCHIERTE SACHGEBIETE (Int. Cl.5)**

B 23 Q

Der vorliegende Recherchenbericht wurde für alle Patentansprüche erstellt

| Recherchenort | Abschlußdatum der Recherche | Prüfer |
|---|---|---|
| Den Haag | 09 September 91 | DE GUSSEM J.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument